# EUROPEAN PATENT APPLICATION

(11) **EP 4 683 054 A1**
(43) Date of publication of application: **21.01.2026**
(21) Application number: 25190772.1
(22) Date of filing: 21.07.2025
(51) Int. Cl.: H01M 50/107, H01M 50/152, H01M 50/159, H01M 50/179, H01M 50/186, H01M 50/191, H01M 50/533, H01M 50/536, H01M 50/55, H01M 50/552, H01M 50/559, H01M 50/564

(54) **ELECTROCHEMICAL CELL AND METHOD FOR PROVIDING THE SAME**

(30) Priority: 19.07.2024 US 202463673441 P; 17.07.2025 US 202519271925
(71) Applicant: Greatbatch Ltd., Clarence, NY 14031 (US)
(72) Inventor: YUN, Ho chul, East Amherst, 14051 (US); BROOKS, Bradley C, Glenwood, 14069 (US); LEHNES, Joseph M, Williamsville, 14221 (US); VIYANNALAGE, Lasantha, East Amherst, 14051 (US); TORRES, James, Depew, 14043 (US); WEINHEIMER, Matthew, Sanborn, 14132 (US); ZHOU, Boyang, Buffalo, 14215 (US); ANASTASIA, Nathan, Buffalo, 14216 (US)
(74) Representative: Mathys & Squire

(57) **Abstract**

A case-neutral electrochemical cell comprises a jellyroll electrode assembly housed inside a cylindrically shaped casing. The anode has a tab connected to the perimeter of a metallic couple residing between a casing header and the electrode assembly. Separately, an anode lead is connected to the couple. This establishes continuity from the anode tab connected to the couple in turn connected to the anode lead extending from the couple and then in a non-conductive relationship through the header to serve as the negative terminal for the cell. A cathode lead, which had previously served as a winding mandrel for the electrode assembly, extends in a non-conductive relationship through both the couple and a second opening in the header. That way, the anode and cathode leads are both electrically isolated from the casing comprising the header closing an open-ended container housing the electrode assembly to provide the case-neutral cell design.

## Description

### CROSS-REFERENCE TO RELATED APPLICATION

This application claims priority to U.S. provisional patent application Serial No. 63/673,441, filed on July 19, 2024.

### FIELD OF THE INVENTION

The present invention generally relates to the conversion of chemical energy to electrical energy. More particularly, the present invention relates to a case-neutral electrochemical cell having a jellyroll or spirally-wound electrode assembly. In a preferred embodiment, the electrochemical cell is a cylindrically shaped miniature electrochemical cell having a total size or volume that is less than 0.5 cc. Such a cylindrically shaped cell can have an outside diameter that is as small as 0.157 inches.

### BACKGROUND OF THE INVENTION

In a case-neutral electrochemical cell, connecting an anode lead extending outwardly from a jellyroll or spirally-wound electrode assembly directly to an anode terminal pin or anode lead that is electrically isolated from the cell casing can be difficult. That is because when an elongate anode, cathode and intermediate separator electrode stack is wound around a mandrel into a jellyroll or spirally-wound configuration, the outwardly extending anode tab does not always reside in a consistently similar annular position with respect to an outwardly extending cathode lead serving as the winding mandrel. This inconsistency can make it difficult to position the cathode lead in an opening in a header closing an open-ended casing container while also connecting the anode tab to an anode lead extending through a second opening in the header. To provide the case-neutral cell design, the anode and cathode leads are hermetically sealed in their respective header openings by an insulating sealing glass.

Accordingly, there is a need for a case-neutral cell design for a jellyroll or spirally-wound electrode assembly. In a preferred embodiment, the cell is a miniature electrochemical cell having a total size or volume that is less than 0.5 cc.

### SUMMARY OF THE INVENTION

Aspects and embodiments of the present invention are set out in the appended claims.

Generally, the present invention is directed to a case-neutral electrochemical cell comprising a jellyroll or spirally-wound electrode assembly housed inside a cylindrically shaped casing. The anode of the electrode assembly has an outwardly extending anode tab that is connected to the perimeter of a specially designed metallic couple residing between the header and the electrode assembly. An anode lead resides in an opening in the couple where it is electrically connected to the couple. This establishes electrical continuity from the anode tab extending from the anode current collector with the tab being connected to the perimeter of the metallic couple in turn connected to the anode lead extending from the couple and then in a nonconductive relationship through the header and beyond an outer surface thereof to serve as the negative terminal for the cell. A cathode lead which had previously served as a winding mandrel for the electrode assembly, extends in a nonconductive relationship through both the metallic couple and a second opening in the header. That way, the anode and cathode leads are both electrically isolated from the casing comprising the header closing an open-ended container housing the electrode assembly to provide the case-neutral cell design.

These and other aspects of the present invention will become increasingly more apparent to those skilled in the art by reference to the following detailed description and to the appended drawings.

### BRIEF DESCRIPTION OF THE DRAWINGS

FIG. 1 is a perspective view of an exemplary case-neutral electrochemical cell 10 according to the present invention.
FIG. 2 is a cross-sectional view illustrating a conductive couple 72 nested in a downwardly-facing polymeric cup 70 in turn nested in the conductive header 20 for the open-ended container 12 shown in FIG. 1 with the couple connected to a cathode terminal 32 and an anode lead 64.

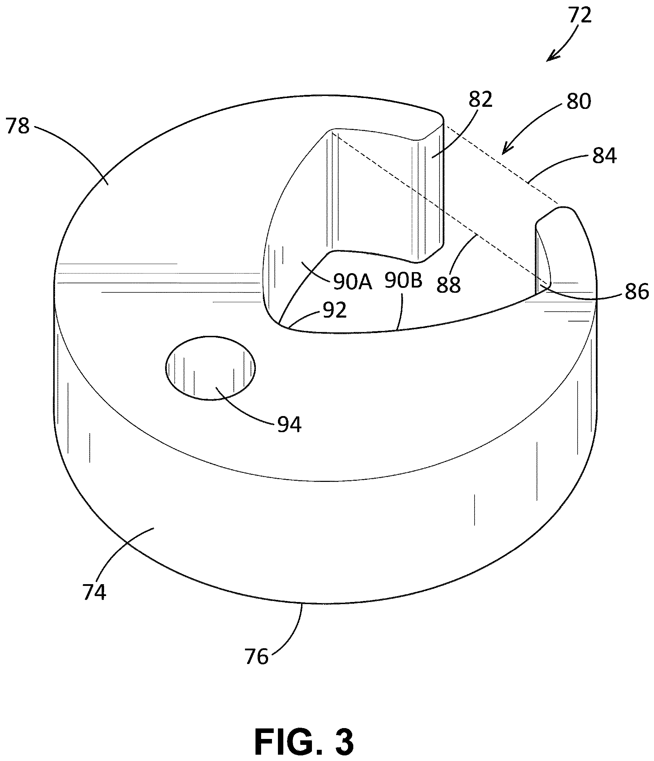

FIG. 3 is a perspective view of the conductive couple 72 shown in FIG. 2.
FIG. 4 is a side-elevational view of the conductive couple 72 nested in a downwardly-facing polymeric cup 70 (FIG. 2) in turn nested in the conductive header 20 shown in FIG. 2.
FIG. 5 is a side elevational view of the conductive couple 72 nested in a downwardly-facing polymeric cup 70 (FIG. 2) in turn nested in the conductive header 20 shown in FIG. 2 and with the upwardly extending anode tab 96 of a spirally-wound electrode assembly connected to the couple 72.
FIG. 6 is a perspective view looking up at the underside of the conductive couple 72 nested in the downwardly facing polymeric cup 70 in turn nested in the conductive header 20 shown in FIGS. 2 and 4.

### DETAILED DESCRIPTION OF THE PREFERRED EMBODIMENTS

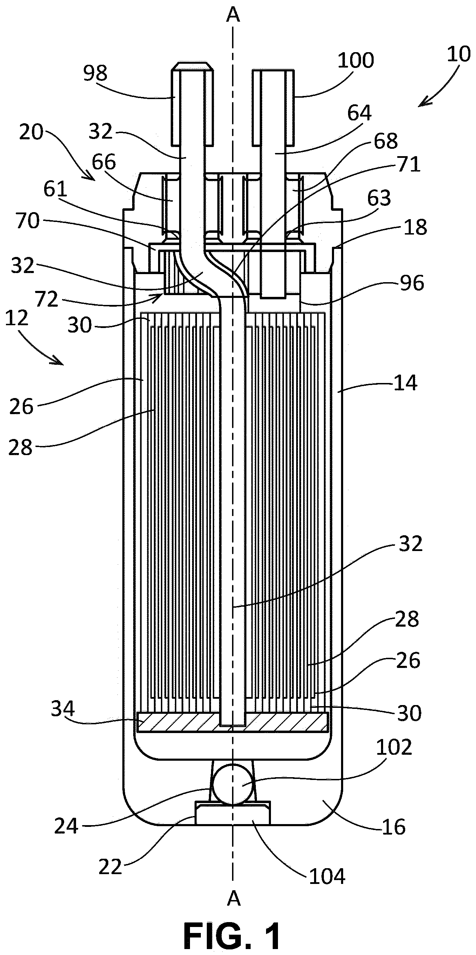

Turning now to the drawings, FIG. 1 illustrates an exemplary case-neutral jellyroll or spirally wound electrochemical cell 10 according to the present invention. The electrochemical cell 10 has a casing comprising an open-ended container 12 that is generally in the form of a deep drawn can having a cylindrically shaped sidewall 14 extending upwardly from an integral bottom wall 16 to an upper annular edge 18. The upper edge 18 surrounds an opening leading into the cylindrically shaped sidewall 14 closed by the bottom wall 16 to define the open-ended container 12. Opposite the bottom wall 16, the open-ended container 12 is closed by a conductive header 20 that, as will be described in detail hereinafter, is welded to the upper annular edge 18. Preferred materials for the casing including the header 20 closing the open-ended container 12 are titanium although stainless steel, such as 304L SS, mild steel, nickel-plated mild steel and aluminum are also suitable.

The bottom wall 16 has a thickness that is greater than that of the sidewall 14 and it includes an electrolyte fill port comprising a first cylindrically shaped opening 22 that is centered along a longitudinal axis A-A of the electrochemical cell 10 and extends part-way through the thickness of the bottom wall 16. The first opening 22 leads to a second cylindrically shaped opening 24 that is centered along the axis A-A in open communication with the interior of the container 12. The first opening 22 has a greater diameter than the second opening 24. The significance of the relative sizes of the openings 22 and 24 will be described in detail hereinafter.

The electrochemical cell 10 further includes an electrode assembly that is housed inside the casing. The electrode assembly comprises an anode 26 and a cathode 28 separated from direct physical contact with each other by an intermediate separator 30. The electrode assembly shown is of a spirally wound or "jellyroll" configuration comprising the anode 26 made by laminating battery grade anode active material onto a metal conductor grid or screen (not shown). The cathode 28 is typically fabricated by sheeting a cathode active material onto an expanded metal foil or screen (not shown).

Preferably, the electrochemical cell 10 is a secondary or rechargeable cell. Illustrative anode active materials for the anode 26 for a secondary electrochemical system include carbon-based materials selected from coke, graphite, acetylene black, carbon black, glass carbon, hairy carbon, and mixtures thereof, or lithiated materials selected from Li₄Ti₃O₁₂, lithiated silver vanadium oxide, lithiated copper silver vanadium oxide, lithiated copper sulfide, lithiated iron sulfide, lithiated iron disulfide, lithiated titanium disulfide, lithiated copper vanadium oxide, LiₓCu_{w}Ag_{y}V₂O_{z} with 0.5≤x≤4.0, 0.01≤w≤1.0, 0.01≤y≤1.0 and 5.01≤z≤6.5, and mixtures thereof.

In the exemplary secondary electrochemical cell 10, the cathode 28 comprises an active material that is deposited on a carbonaceous coating contacting the cathode current collector using any one of many suitable methods (i.e., dispensed, pressed, preformed, sprayed, sputter deposition, evaporation deposition, tape casted, and as a coating). While not intending to limit the present electrochemical cell 10, the cathode active material has a thickness that ranges from about 5 µm to ≥ 1 mm. Suitable cathode active materials for secondary electrochemical systems are selected from LiCoO₂, LiNiO₂, LiMnO₂, TiS, FeS, FeS₂, and lithium nickel manganese cobalt oxide (LiNiₐMn_{b}Co_{1-a-b}O₂).

The separator 30 is provided between the anode 26 and the cathode 28 and it typically comprises a nonwoven glass fiber hydrocarbon or fluorocarbon polymer. A suitable separator is preferably made of a fabric woven from fluoropolymeric fibers including polyethylene tetrafluoroethylene, polyvinylidine fluoride, and polyethylene chlorotrifluoroethylene used either alone or laminated with a fluoropolymeric microporous film, non-woven glass, polypropylene, polyethylene, glass fiber materials, ceramics, polytetrafluoroethylene membrane commercially available under the designation ZITEX (Chemplast Inc.), polypropylene membrane commercially available under the designation CELGARD (Celanese Plastic Company, Inc.) and a membrane commercially available under the designation DEXIGLAS (C. H. Dexter, Div., Dexter Corp.).

The opposite polarity electrodes 26, 28 and intermediate separator 30 are provided in an electrode stack and then wound together around a conductive cathode lead 32. Cathode lead 32 has an exemplary diameter of about 0.016 inches and serves as a winding mandrel to provide the electrode assembly as a spirally-wound or jellyroll-type assembly that is subsequently housed inside the casing. If desired, the jellyroll electrode assembly rests on an insulation plate 34 contacting the bottom wall 16. This prevents the wound anode-cathode assembly from telescoping downwardly. Preferred electrically conductive materials for the cathode lead 32 include MP35N, stainless steel, titanium alloy, platinum, platinum alloys, palladium, palladium alloys or a refractory metal such as molybdenum.

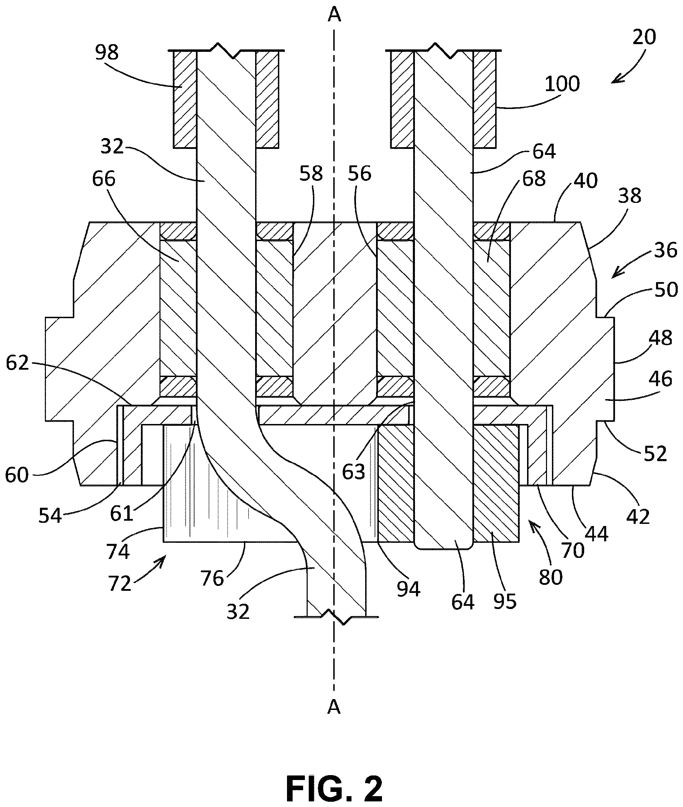

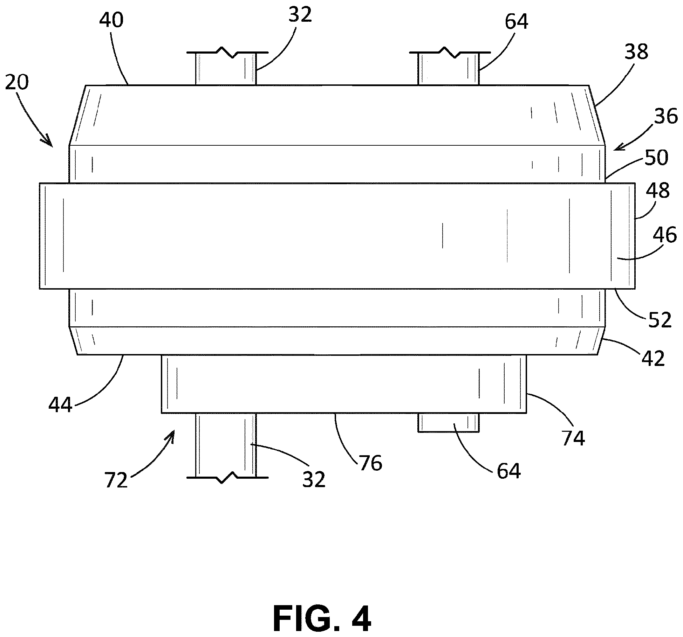

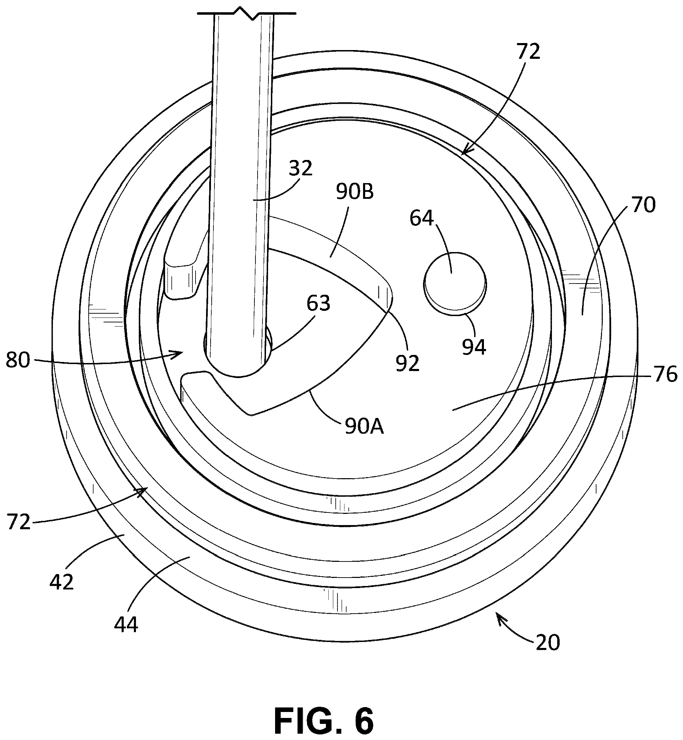

As shown in FIGS. 2 and 4 to 6, the conductive header 20 is a plate-shaped member having a generally cylindrically shaped outer surface 36 that meets an inwardly beveled upper annular surface 38 extending to a planar upper end surface 40. The cylindrical outer surface 36 also meets an inwardly beveled lower annular surface 42 extending to a planar lower end surface 44. The distance between the planar upper and lower end surfaces 40 and 44 defines the thickness of the conductive header 20.

An annular protrusion 46 extends outwardly from the cylindrically shaped outer surface 36. In cross-section, the annular protrusion 46 has a vertical surface 48 that extends to upper and lower horizontal steps 50 and 52 that both meet the cylindrically shaped outer surface 36 of the conductive header 20. The upper step 50 is a greater distance from the planar upper surface end 40 than the lower step 52 is from the planar lower end surface 44.

A cylindrically shaped lower recess 54 extends upwardly from the planar lower end surface 44 part-way through the header thickness to meet a pair of side-by-side cylindrically shaped openings 56 and 58 that in turn extend to the planar upper end surface 40. The header recess 54 is defined by a cylindrically shaped inner sidewall 60 that meets a horizontally oriented planar inner wall 62. The planar wall 62 resides along an imaginary plane that intersects the vertical surface 48 of the annular protrusion 46 spaced closer to the lower annular bevel 42 than to the upper annular bevel 38.

As shown in FIG. 1, to close the open-ended container 12, the conductive header 20 is mounted on the upper annular edge 18 of the container with the lower step 52 contacting the upper annular edge 18 and an inner surface of the cylindrical sidewall 14 immediately adjacent to the upper edge. Preferably, a weld, for example, a laser weld (not shown), is formed at the junction of the lower step 52 of the header annular protrusion 46 and the upper annular edge 18 of the container 12. The weld hermetically seals the header 20 to the casing container 12.

Prior to winding the electrode assembly on the cathode lead 32 serving as a winding mandrel as previously described, cylindrically shaped glass pre-forms 66 and 68 are fitted onto the lead 32 and a second lead serving as an anode lead 64. The lead/pre-form assemblies 32/66 and 64/68 are then fitted into the respective openings 58 and 56 in the header 20. The thusly constructed header assembly is then subjected to a heating protocol to melt the glass pre-forms into intimate hermetically sealed contact with the leads 32, 64 and the conductive header 20 defining the openings 58, 56. TA-23, which is an alkaline earth aluminosilicate type glass developed by Sandia National Labs with a melting temperature of about 775 °C, is one exemplary insulating glass that is useful with the present electrochemical cell 10. Another preferred insulating glass is Cabal-12, which is a calcium-boro-aluminate type glass that was also developed by Sandia National Labs. Cabal-12 has a melting temperature of about 925 °C. Preferred materials for the anode lead 64 are similar to those that have been previously described as useful for the cathode lead 32.

After the leads 32, 64 have been glassed into the header 20, but also prior to the previously described winding of the electrode assembly onto the cathode lead 32 serving as a winding mandrel, a downwardly facing cup 70 is slid over the free proximal ends of the leads 32, 64 and moved into the header recess 54. Openings 61 and 63 extend through the planar inner wall of the cup 70. These openings 61, 63 receive the respective leads 32, 64. The cup 70 is a polymeric member that is sized and shaped to snuggly fit against the cylindrically shaped inner sidewall 60 meeting the horizontally oriented planar inner wall 62 of the header recess 54. A polymeric insulating sleeve 71 (FIG. 1) is then slid over the cathode lead 32 and moved up against the polymeric cup 70. This is followed by a metallic couple 72, which is slid over the free proximal ends of the leads 32, 64 and then moved into the cup 70 in turn seated in the header recess 54.

The metallic couple 72 is a disc or plate-shaped member having a perimeter defined by a cylindrically shaped sidewall 74 extending to a planar lower or first end surface 76 opposite a planar upper or second end surface 78. The lower and upper end surfaces 76, 78 are parallel to each other and the distance between them defines the thickness of the couple 72. Suitable conductive materials for the couple 72 include titanium, 304L stainless steel, mild steel, nickel-plated mild steel, and aluminum.

The cylindrical sidewall 74 is interrupted by a shaped inlet 80 that comprises a first gap 82 of a first width 84 of about 0.03 inches that widens to a second gap 86 of a second, greater width 88 than the first distance 84. Extending inwardly from the second gap 86, the shaped inlet 80 has opposed curved inner sidewall portions 90A and 90B that meets a curved inner end 92 of the inlet 80. The first gap 82 having the first width 84 of about 0.03 inches leading to the second gap 86 is sufficiently wide to let the cathode lead 32 having a diameter of about 0.016 inches to slip laterally through and into the interior of the inlet 80 defined by the opposed curved inner sidewall portions 90A and 90B meeting the curved inner end 92 of the inlet 80.

A cylindrical opening 94 spaced from the curved inner end 92 extends through the thickness of the couple 72. The opening 94 has a diameter of about 0.0165 inches, which is sufficiently wide to permit the anode lead having a diameter of about 0.0160 inches to fit into. Anode lead 64 is electrically connected to the couple 72 by a conductive adhesive or a conductive epoxy 95 (FIG. 2). Then, with the couple 72 seated in the cup 70 in turn seated in the header recess 54, anode lead 64 is trimmed so that its proximal end is substantially flush with the planar lower end surface 76 of the couple 72.

The previously describe anode 26 of the electrode assembly has a tab 96 extending upwardly from its anode current collector (not shown). While one tab 96 is shown in the drawings, it is within the scope of the present invention that two or more tabs can extend upwardly from the anode current collector.

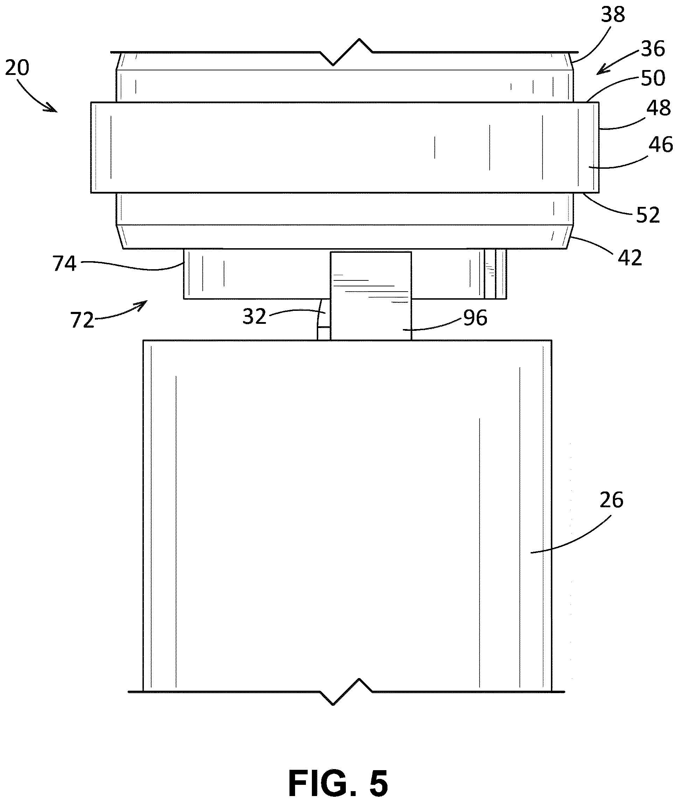

The reason for the couple 72 is that winding the electrode assembly comprising the stacked opposite polarity anode and cathode 26, 28 and the intermediate separator 30 frequently results in the anode tab 96 extending from the wound assembly in an annular position that is not consistent. However, as shown in FIGS. 1 and 5, the anode tab 96 is easily connected to the sidewall 74 of the cylindrically shaped couple 72 at any annular position except at the inlet 80. Since the width of the first inlet gap is about 0.03 inches, there is a sufficiently large annular area to the sidewall 74 of the couple 72 to provide for connecting the anode lead 96 at about a 90° to 95° annular extent around the couple. That way, variations in the relative positioning of the cathode lead 32 centered in the electrode assembly with respect to the anode tab 96 are easily compensated for during the manufacturing process when building the electrochemical cell 10.

With the second lead 64 being electrically connected to the couple 72 in the cylindrical opening 90 and the anode tab 96 connected to the couple sidewall 74, there is electrical continuity from the anode 26 to the tab 96 connected to the metallic couple 72 in turn connected to the anode lead 64. A distal portion of the anode lead 64 extends outwardly beyond the upper end surface 40 of the conductive header 20 and serves as a negative terminal for the electrochemical cell 10. Similarly, a distal portion of the cathode lead 32 extends outwardly beyond the upper end surface 40 of the conductive header 20 and serves as the positive terminal for the cell 10. To help the end user to connect the opposite polarity terminals to a load that is intended to be powered by the electrochemical cell 10, conductive sleeves 98 and 100 are fitted onto the distal ends of the leads 32 and 64 and secured in place.

As shown in FIG. 1, the electrolyte fill port comprises the first cylindrically shaped opening 22 leading to the second cylindrically shaped opening 24 that are preferably centered along the axis A-A in open communication with the interior of the container 12. After the electrode assembly comprising the anode 26, cathode 28 and intermediate separator 30 are wound into a jellyroll or spirally-wound configuration around the cathode lead 32 and housed inside the casing, and with the conductive header 20 supporting the hermetically sealed cathode and anode leads 32, 64 secured to the annular rim 18 of the container 12, for example, by laser welding, and with the anode tab 96 connected to the couple 72 nested in the polymeric cup 70, an electrolyte is filled into the casing to activate the electrode assembly.

As shown in FIG. 1, the electrolyte fill port is hermetically closed by moving a first sealing member 102, for example, a metallic ball into a press-fit in the second opening 24. Specifically, the first sealing member 102 is positioned flush with, or slightly spaced from the transition from the first larger diameter opening 22 to the second opening 24. The first sealing member 102 is preferably welded into sealing registry with the bottom wall 16 of the casing. This is followed by a disc or plate-shaped sealing member 104 that is fitted into the first, greater diameter opening 22. The second sealing member 104 is secured in place, such as by being laser welded into sealing registry with the bottom wall 16 of the casing. The reason for the first sealing member 102 is to prevent out-gassing byproducts from the electrolyte seeping past the second sealing member 104 as it is being welded into place. Should such outgassing byproducts seep past the second sealing member 104, they could compromise the hermetic integrity of the closure system 102, 104 for the electrolyte fill port.

In one embodiment, the electrochemical cell 10 is a secondary or rechargeable cell. In a secondary system, the anode comprises a material capable of intercalating and deintercalating an alkali metal, which is preferably lithium. A carbonaceous anode comprising any of the various forms of carbon (e.g., coke, graphite, acetylene black, carbon black, glassy carbon, etc.), which are capable of reversibly retaining the lithium species, is preferred. Graphite is particularly preferred due to its relatively high lithium-retention capacity. Regardless the form of the carbon, fibers of the carbonaceous material are particularly advantageous because they have excellent mechanical properties that permit them to be fabricated into rigid electrodes capable of withstanding degradation during repeated charge/discharge cycling.

The cathode of a secondary cell preferably comprises a lithiated material that is stable in air and readily handable. Examples of such air-stable lithiated cathode materials include oxides, sulfides, selenides, and tellurides of such metals as vanadium, titanium, chromium, copper, molybdenum, niobium, iron, nickel, cobalt, and manganese. The more preferred oxides include LiNiO₂, LiMn₂O₄, LiCoO₂, LiCO_{0.92}SnO_{0.08}O₂ and LiCo₁₋ₓNiₓO₂

The lithiated active material is preferably mixed with a conductive additive selected from acetylene black, carbon black, graphite, and powdered metals of nickel, aluminum, titanium, and stainless steel. The cathode further comprises a fluoro-resin binder, preferably in a powder form, such as PTFE, PVDF, ETFE, polyamides and polyimides, and mixtures thereof. The current collector is selected from stainless steel, titanium, tantalum, platinum, gold, aluminum, cobalt nickel alloys, highly alloyed ferritic stainless steel containing molybdenum and chromium, and nickel-, chromium- and molybdenum-containing alloys.

Suitable nonaqueous electrolytes for a secondary electrochemical systems comprise an inorganic salt dissolved in a nonaqueous solvent and, more preferably, a lithium metal salt dissolved in a quaternary mixture of organic carbonate solvents comprising a dialkyl (non-cyclic) carbonate selected from dimethyl carbonate (DMC), diethyl carbonate (DEC), dipropyl carbonate (DPC), ethyl methyl carbonate (EMC), methyl propyl carbonate (MPC) and ethyl propyl carbonate (EPC), and mixtures thereof, and at least one cyclic carbonate selected from propylene carbonate (PC), ethylene carbonate (EC), butylene carbonate (BC) and vinylene carbonate (VC), and mixtures thereof. Organic carbonates are generally used in the electrolyte solvent system for such battery chemistries because they exhibit high oxidative stability toward cathode materials and good kinetic stability toward anode materials.

In another embodiment, the electrochemical cell 10 is a primary cell comprising a lithium anode or its alloys, for example, Li-Si, Li-Al, Li-B and Li-Si-B. Preferably the anode is in the form of a thin sheet or foil that is pressed or rolled onto a metallic anode current collector.

The cathode for a primary cell is an electrically conductive material, preferably a solid material. The solid cathode may comprise a metal element, a metal oxide, a mixed metal oxide, a metal sulfide, and combinations thereof. A preferred cathode active material is selected from silver vanadium oxide, fluorinated carbon (CFₓ), copper silver vanadium oxide, manganese dioxide, cobalt nickel, nickel oxide, copper oxide, copper sulfide, iron sulfide, iron disulfide, titanium disulfide, copper vanadium oxide, and mixtures thereof.

Before fabrication into an electrode for incorporation into the electrochemical cell 10, the cathode active material is mixed with a binder material such as a powdered fluoro-polymer, more preferably powdered polytetrafluoroethylene or powdered polyvinylidene fluoride present at about 1 to about 5 weight percent of the cathode mixture. Further, up to about 10 weight percent of a conductive diluent is preferably added to the cathode mixture to improve conductivity. Suitable materials for this purpose include acetylene black, carbon black and/or graphite or a metallic powder such as powdered nickel, aluminum, titanium, and stainless steel. The preferred cathode active mixture thus includes a powdered fluoro-polymer binder present at about 3 weight percent, a conductive diluent at about 3 weight percent and about 94 weight percent of the cathode active material.

The cathode may be prepared by rolling, spreading, or pressing the cathode active mixture onto a suitable cathode current collector. Cathodes prepared as described are preferably in the form of a strip wound with a corresponding strip of anode material in a "jellyroll" like structure or a flat-folded electrode stack.

A primary electrochemical cell includes a nonaqueous, ionically conductive electrolyte having an inorganic, ionically conductive salt dissolved in a nonaqueous solvent and, more preferably, a lithium salt dissolved in a mixture of a low viscosity solvent and a high permittivity solvent. The salt serves as the vehicle for migration of the anode ions to intercalate or react with the cathode active material. Suitable salts include LiPF₆, LiBF₄, LiAsF₆, LiSbF₆, LiClO₄, LiO₂, LiAlCl₄, LiGaCl₄, LiC(SO₂CF₃)₃, LIN(SO₂CF₃)₂, LiSCN, LiO₃SCF₃, LiC₆F₅SO₃, LiO₂CCF₃, LiSO₆F, LiB(C₆H₅)₄, LiCF₃SO₃, and mixtures thereof.

Suitable low viscosity solvents for a primary system include esters, linear and cyclic ethers and dialkyl carbonates such as tetrahydrofuran (THF), methyl acetate (MA), diglyme, trigylme, tetragylme, dimethyl carbonate (DMC), 1,2-dimethoxyethane (DME), 1,2-diethoxyethane (DEE), 1-ethoxy, 2-methoxyethane (EME), ethyl methyl carbonate, methyl propyl carbonate, ethyl propyl carbonate, diethyl carbonate, dipropyl carbonate, and mixtures thereof. High permittivity solvents for a primary system include cyclic carbonates, cyclic esters, and cyclic amides such as propylene carbonate (PC), ethylene carbonate (EC), butylene carbonate, acetonitrile, dimethyl sulfoxide, dimethyl, formamide, dimethyl acetamide, γ-valerolactone, γ-butyrolactone (GBL), N-methyl-pyrrolidinone (NMP), and mixtures thereof. The preferred electrolyte for a lithium primary cell is 0.8M to 1.5M LiAsF₆ or LiPF₆ dissolved in a 50:50 mixture, by volume, of PC as the preferred high permittivity solvent and DME as the preferred low viscosity solvent.

Thus, a case-neutral electrochemical cell comprising a jellyroll electrode assembly housed inside a cylindrically shaped casing is described. The specially designed couple 72 helps solve the problem of aligning the anode lead 96 extending outwardly from the jellyroll or spirally-wound electrode assembly with the anode terminal pin or anode lead 64 so that they can be electrically connected together. That is because when an elongate anode 26, cathode 28 and intermediate separator 30 as an electrode stack are wound into a jellyroll or spirally-wound configuration around the cathode lead 32 serving as a winding mandrel, the outwardly extending anode tab 96 does not always reside in a consistently similar annular position with respect to the outwardly extending cathode lead 32. This inconsistency makes it difficult to position the cathode lead 32 in the opening 58 in the header 20 closing the open-ended casing container 12 while also connecting the anode tab 96 to an anode lead 64 extending through the second opening 56 in the header. However, by connecting the anode tab 96 to the perimeter of the metallic couple 72 positioned between the electrode assembly and the casing header 20, any relative inconsistency regarding the extending anode tab 96 with respect to the extending cathode lead 32 from one electrode assembly to the next is compensated for. That way, the metallic couple 72 helps eliminate scrape while improving the reliability of case-neutral electrochemical cells, particularly those of a miniature type defined as having a total size or volume that is less than 0.5 cc.

A method for providing an electrochemical cell is also described. The method comprises providing an open-ended metallic container comprising a container annular sidewall extending from a closed bottom wall to an upper annular rim surrounding a container opening leading into the container, wherein the container has an electrolyte fill port. A header assembly is also provided. The header assembly comprises providing a header comprising a header sidewall extending to spaced-apart header inner and outer end surfaces. Header first and second openings extend to the header inner and outer end surfaces. The header has a lower recess. Then, first and second insulating glass preforms are positioned into the respective header first and second openings.

An anode lead extends through the first glass preform in the header first opening. The anode lead has anode lead proximal and distal portions extending outwardly beyond the respective header inner and outer end surfaces.

A cathode lead extends through the second glass preform in the header second opening. The cathode lead has cathode lead proximal and distal portions extending outwardly beyond the respective header inner and outer end surfaces. Then, the header including the anode and cathode leads is heated to melt the first and second glass preforms so that the anode and cathode leads are hermetically sealed in the respective header first and second openings but electrically isolated from the header.

A polymeric cup comprising cup first and second openings is provided. The anode and cathode proximal lead portions are then moved into the respective cup first and second openings followed by nesting the polymeric cup into the header lower recess.

A metallic couple comprising a couple sidewall extending to spaced apart couple first and second end surfaces is provided. An inlet through the couple sidewall extends to the couple first and second end surfaces and a couple opening spaced from the inlet that extends to the couple first and second end surfaces.

The cathode lead proximal portion is then moved laterally into the couple inlet and the anode lead proximal portion is then moved into the couple opening. The anode lead proximal portion is trimmed so that the anode lead is adjacent to or flush with the couple first end surface.

An electrode assembly is also provided. That is done by providing an anode comprising an anode active material contacted to an anode current collector. The anode current collector has at least one outwardly extending anode tab. A cathode comprising a cathode active material contacted to a cathode current collector is also provided. The cathode current collector is connected to the cathode lead proximal portion. A separator is positioned between the anode and the cathode, and the anode, cathode and intermediate separator as a stack are wound around the cathode lead proximal portion into a jellyroll-type electrode assembly. The thusly constructed electrode assembly is moved into the open-ended container and then the header sidewall is contacted to the upper annular rim to close the container opening. The header sidewall is welded to the upper annular rim to thereby provide the casing housing the electrode assembly and an electrolyte is filled into the casing through the fill port followed by closing the fill port.

It is appreciated that various modifications to the inventive concepts described herein may be apparent to those of ordinary skill in the art without departing from the spirit and scope of the present invention as defined by the appended claims.

## Claims

1. An electrochemical cell, comprising:
a) a casing, comprising:
i) an open-ended metallic container comprising a container annular sidewall extending from a closed bottom wall to an upper annular rim surrounding a container opening leading into the container, wherein the container has a hermetically sealed electrolyte fill port; and
ii) a metallic header comprising a header sidewall extending to spaced-apart header inner and outer end surfaces, wherein header first and second openings extend to the header inner and outer end surfaces, and wherein the header has a lower recess;
iii) wherein the header sidewall contacts the upper annular rim to close the container opening to thereby provide the casing;
b) an electrode assembly housed inside the casing, the electrode assembly comprising:
i) an anode comprising an anode active material contacted to an anode current collector, wherein the anode current collector has at least one outwardly extending anode tab;
ii) a cathode comprising a cathode active material contacted to a cathode current collector, wherein the cathode current collector is connected to a cathode lead having an outwardly extending cathode lead distal portion;
iii) a separator disposed between the anode and the cathode, wherein the anode, the cathode and the intermediate separator are wound around the cathode lead into a jellyroll-type electrode assembly housed inside the casing; and
iv) an electrolyte in the casing activating the electrode assembly; and
c) a polymeric cup nested in the header recess, wherein the polymeric cup has cup first and second openings;
d) a metallic couple comprising a couple sidewall extending to spaced apart couple first and second end surfaces, wherein the couple is nested in the polymeric cup and includes an inlet through the couple sidewall that extends to the couple first and second end surfaces and a couple opening spaced from the inlet that extends to the couple first and second end surfaces; and
e) an anode lead extending through the first openings in the header and the couple, wherein the anode lead is electrically isolated from the header by a first sealing glass in the header first opening with a distal portion of the anode lead extending outwardly beyond the header outer end surface, and wherein the at least one outwardly extending anode tab is contacted to the couple sidewall so that electrical continuity is established from the anode to the anode tab contacted to the couple connected to the anode lead electrically isolated from the header closing the open end of the container by the first sealing glass to thereby provide a negative terminal for the electrochemical cell,
f) wherein the cathode lead extends outwardly from the jellyroll electrode assembly, through the couple inlet without contacting the couple and through the header second opening where the cathode lead is electrically isolated from the header by a second sealing glass with a distal portion of the cathode lead extending outwardly beyond the header outer end surface so that electrical continuity is established from the cathode to the outwardly extending cathode lead providing a positive terminal for the electrochemical cell.

2. The electrochemical cell of claim 1, wherein first and second sealing glasses are individually selected from Cabal-12 and TA-23.

3. The electrochemical cell of claim 1 or claim 2, wherein a polymeric insulating sleeve is fitted on the cathode lead extending through the couple inlet to prevent the cathode lead from contacting the couple.

4. The electrochemical cell of any of claims 1 to 3, wherein the couple inlet through the couple sidewall has a width of about 0.03 inches and the anode and cathode leads each have a diameter of about 0.016 inches.

5. The electrochemical cell of any of claims 1 to 4, wherein the header sidewall includes an annular protrusion forming a lower step, and wherein the lower step is seated on the upper annular rim to close the container opening and thereby provide the casing.

6. The electrochemical cell of any of claims 1 to 5, wherein:
the anode active material is selected from coke, graphite, acetylene black, carbon black, glass carbon, hairy carbon, Li₄Ti₃O₁₂, lithiated silver vanadium oxide, lithiated copper silver vanadium oxide, lithiated copper sulfide, lithiated iron sulfide, lithiated iron disulfide, lithiated titanium disulfide, lithiated copper vanadium oxide, LiₓCu_{w}Ag_{y}V₂O_{z} with 0.5≤x≤4.0, 0.01≤w≤1.0, 0.01≤y≤1.0 and 5.01≤z≤6.5, and mixtures thereof; and/or
the cathode active material is selected from silver vanadium oxide, copper silver vanadium oxide, manganese dioxide, cobalt nickel, nickel oxide, copper oxide, copper sulfide, iron sulfide, iron disulfide, titanium disulfide, copper vanadium oxide, and mixtures thereof.

7. The electrochemical cell of any of claims 1 to 6, wherein the anode and cathode current collectors are individually selected from aluminum, nickel, copper, stainless steel, tantalum, cobalt and titanium, and alloys thereof.

8. The electrochemical cell of any of claims 1 to 7, wherein the casing comprising the open-ended container closed by the header and the conductive couple are selected from titanium, 304L stainless steel, mild steel, nickel-plated mild steel, and aluminum.

9. A method for providing an electrochemical cell, comprising the steps of:
a) providing an open-ended metallic container comprising a container annular sidewall extending from a closed bottom wall to an upper annular rim surrounding a container opening leading into the container, wherein the container has an electrolyte fill port;
b) providing a header assembly, comprising:
i) providing a header comprising a header sidewall extending to spaced-apart header inner and outer end surfaces, wherein header first and second openings extend to the header inner and outer end surfaces, and wherein the header has a lower recess;
ii) positioning first and second insulating glass preforms into the respective header first and second openings;
iii) providing an anode lead extending through the first glass preform in the header first opening, wherein the anode lead has anode lead proximal and distal portions extending outwardly beyond the respective header inner and outer end surfaces;
iv) providing a cathode lead extending through the second glass preform in the header second opening, wherein the cathode lead has cathode lead proximal and distal portions extending outwardly beyond the respective header inner and outer end surfaces;
v) heating the header including the anode and cathode leads to melt the first and second glass preforms so that the anode and cathode leads hermetically sealed in the respective header first and second openings are electrically isolated from the header;
c) providing a polymeric cup comprising cup first and second openings and then moving the anode and cathode proximal lead portions into the respective cup first and second openings followed by nesting the polymeric cup in the header lower recess;
d) providing a metallic couple comprising a couple sidewall extending to spaced apart couple first and second end surfaces, wherein the couple includes an inlet through the couple sidewall that extends to the couple first and second end surfaces and a couple opening spaced from the inlet that extends to the couple first and second end surfaces;
e) moving the cathode lead proximal portion laterally into the couple inlet and moving the anode lead proximal portion into the couple opening;
f) providing an electrode assembly, comprising:
i) providing an anode comprising an anode active material contacted to an anode current collector, wherein the anode current collector has at least one outwardly extending anode tab;
ii) providing a cathode comprising a cathode active material contacted to a cathode current collector, wherein the cathode current collector is connected to the cathode lead proximal portion;
iii) positioning a separator between the anode and the cathode;
iv) winding the anode, the cathode and the intermediate separator around the cathode lead proximal portion into a jellyroll-type electrode assembly;
g) moving the electrode assembly into the open-ended container and then contacting the header sidewall to the upper annular rim to close the container opening;
h) welding the header sidewall to the upper annular rim to thereby provide the casing housing the electrode assembly; and
i) filling an electrolyte into the casing through the fill port followed by closing the fill port.

10. The method of claim 9, including fitting a polymeric insulating sleeve on the cathode lead extending through the couple inlet to prevent the cathode lead from contacting the couple.

11. The method of any of claim 9 or claim 10, including providing the couple inlet through the couple sidewall having a width of about 0.03 inches and providing the anode and cathode leads each having a diameter of about 0.016 inches.

12. The method of any of claims 9 to 11, including providing the header sidewall comprising an annular protrusion forming a lower step, and contacting the lower step on the upper annular rim to close the container opening and thereby provide the casing.

13. The method of any of claims 9 to 12, including:
individually selecting the first and second sealing glasses from Cabal-12 and TA-23;
selecting the anode active material from coke, graphite, acetylene black, carbon black, glass carbon, hairy carbon, Li₄Ti₃O₁₂, lithiated silver vanadium oxide, lithiated copper silver vanadium oxide, lithiated copper sulfide, lithiated iron sulfide, lithiated iron disulfide, lithiated titanium disulfide, lithiated copper vanadium oxide, LiₓCu_{w}Ag_{y}V₂O_{z} with 0.5≤x≤4.0, 0.01≤w≤1.0, 0.01≤y≤1.0 and 5.01≤z≤6.5, and mixtures thereof;
selecting the cathode active material from silver vanadium oxide, copper silver vanadium oxide, manganese dioxide, cobalt nickel, nickel oxide, copper oxide, copper sulfide, iron sulfide, iron disulfide, titanium disulfide, copper vanadium oxide, and mixtures thereof;
individually selecting the anode and cathode current collectors from aluminum, nickel, copper, stainless steel, tantalum, cobalt and titanium, and alloys thereof; and/or
selecting the casing comprising the open-ended container closed by the header and the conductive couple from titanium, 304L stainless steel, mild steel, nickel-plated mild steel, and aluminum.

14. The method of any of claims 9 to 13, including providing the electrolyte fill port comprising a fill port first opening of a first diameter extending from an outer surface of the bottom wall and part-way through a thickness of the container, and a fill port second opening of a second diameter that is less than the first diameter, the fill port second opening extending from the fill port first opening and into an interior of the container, sealing a closure ball in the fill port second opening followed by sealing a closure plate in the fill port first opening.

15. The method of any of claims 9 to 14, including trimming the anode lead proximal portion so that the anode lead is adjacent to or flush with the couple first end surface.
